# EUROPEAN PATENT SPECIFICATION

(11) **EP 2 839 910 B1**
(45) Date of publication and mention of the grant of the patent: **14.10.2020**
(21) Application number: 14176936.4
(22) Date of filing: 14.07.2014
(51) Int. Cl.: B23B 31/26, B23B 31/30, F15B 15/28, B23Q 17/00

(54) **Chuck locking device for spindles of machine tools**
Sperrvorrichtung für Spindeln von Werkzeugmaschinen
Dispositif de verrouillage de mandring pour machines-outils

(30) Priority: 02.08.2013 IT MI20131315
(43) Date of publication of application: 25.02.2015
(73) Proprietor: Ferraro, Antonio, 20123 Milano MI (IT)
(72) Inventor: Ferraro, Antonio, 20123 Milano MI (IT)
(74) Representative: Concone, Emanuele

(56) References cited:
- EP-A1- 0 780 192
- EP-A2- 2 573 279
- WO-A1-2012/026571
- US-A1- 2004 094 910

## Description

The present invention relates to a locking device for tools, in particular a device mountable on machine tools to lock and unlock a tool which is moved to perform a mechanical processing.

Locking devices known for example from EP 780 192 A1 comprise an axially fixed component, inside of which there is an axially movable member adapted to lock and unlock the tool. Spring locking means bring the device to a locking position, while unlocking takes place by means of drive means with fluid under pressure.

Typically, on board of the machine tool there is a control system comprising a plurality of electrical switches fixed outside the axially fixed component to control the relative position of a shaped profile which is integral with the axially movable member and protrudes from the axially fixed component from the opposite side relative to the tool. Thus, not only the tool mounting/dismounting but also the mechanical working can be performed in an automated and safe manner.

A drawback of this known product lies in the fact that such control systems are mounted externally with respect to the locking device, thus being bulky. These tool holders are therefore not usable when the configuration of the machine tool requires, for constructional reasons, a locking device which is compact and has limited dimensions.

Object of the present invention is therefore to provide a locking device free from the drawbacks described above. Said object is achieved with a locking device whose main features are specified in the first claim, while other features are specified in the remaining claims.

According to the present invention, the axially fixed component comprises an inlet and an outlet for a control fluid under pressure, which ducts can be connected to each other through annular chambers made on the axially movable member. In particular, the control fluid under pressure, preferably air pumped by a compressor, reaches the outlet only with given relative positions between the axially movable member and the axially fixed component.

By connecting means for detecting the flow to the outlet and by providing means for detecting the pressure at the actuating means under pressure, it is possible to know the relative position between the axially movable member and the axially fixed component thanks to a comparison between the values measured by the flow detection means and by the pressure detection means.

According to such solution, since the control system to know the relative position of the axially movable member relative to the axially fixed component is incorporated within the locking device itself, it is possible to obtain a compact and not bulky product mountable on machines which, for structural reasons, have little space available on board. Moreover, with this arrangement, the flow detection means and the means for feeding the control fluid under pressure can also be mounted in a location far from the locking device.

Further advantages and features of the locking device according to the present invention will become evident to those skilled in the art from the following detailed and non-limiting description of an embodiment thereof with reference to the attached drawings in which:
- Figure 1 shows a top view of the locking device according to the present invention;
- Figure 2 shows the section II-II of Figure 1, in which the locking device is in a retracted configuration;
- Figure 3 shows the section III-III of Figure 1;
- Figure 4 shows an operating diagram of the locking device in a first position of the flow;
- Figure 5 shows the locking device of Figure 3 in an extended configuration;
- Figure 6 shows the diagram of Figure 4 in a second position of the flow;
- Figure 7 shows the locking device of Figure 3 in an operating configuration;
- Figure 8 shows the section VIII-VIII of Figure 7;
- Figure 9 shows the locking device of Figure 3 in a non-operating configuration; and
- Figure 10 shows the section X-X of Figure 9.

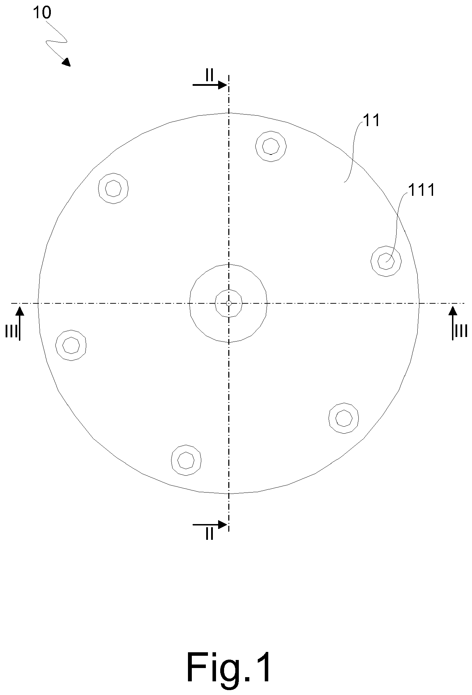

Referring to figures 1 to 4, it is seen that the locking device 10 according to the present invention is provided with an axially fixed component comprising a first axially fixed member 12, substantially cylindrical-shaped, which is arranged in a substantially coaxial manner in a second axially fixed member 13, also substantially cylindrical-shaped. Said axially fixed members 12, 13 are fastened to a head 11 arranged at one end thereof. At least one axially movable member 14, also substantially cylindrical-shaped, can slide in a substantially telescopic and/or coaxial manner between the axially fixed members 12, 13 to lock a tool (not shown in the figures). The first axially fixed member 12 also comprises a substantially annular-shaped flange 121 that is joined to the head 11 and/or to the second axially fixed member 13, acting as an abutment for the axially movable member 14. In alternative embodiments, the flange 121 can be integral with the head 11 and/or with the second axially fixed member 13. In this way, the head 11 or the flange 121, the first axially fixed member 12, the second axially fixed member 13 and/or the axially movable member 14 define an actuation chamber 15. The head 11 may comprise a plurality of threaded blind holes 111 for mounting the locking device 10 on board of a machine tool.

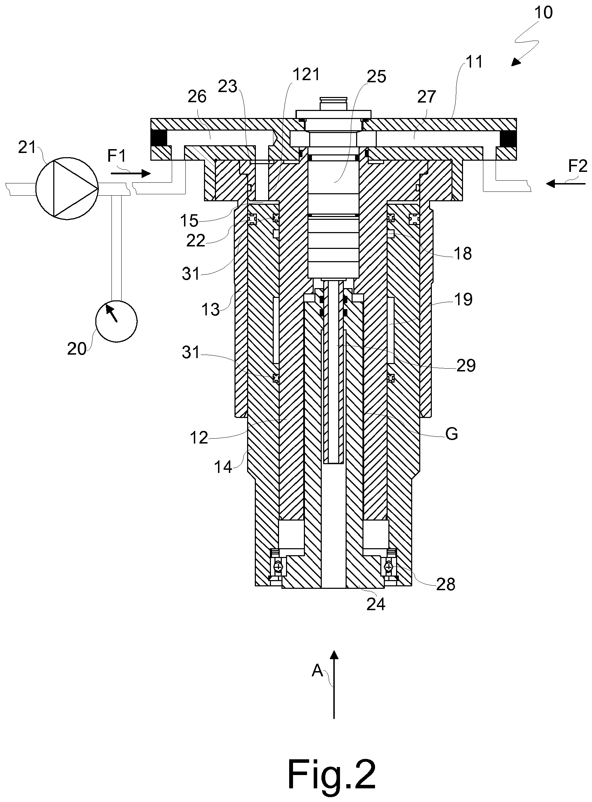

Resilient locking means (not shown in the figures), in particular a helical spring, urge the axially movable member 14 toward the axially fixed component 12, 13 along an axial direction A. With particular reference to Figure 2, an actuation fluid under pressure can be pumped into the actuation chamber 15 so as to translate the axially movable member 14 within the axially fixed component 12, 13 in the direction opposite to the direction A. The actuation fluid under pressure reaches the actuation chamber 15 via at least one duct 26 provided in the head 11 with a substantially radial arrangement and in the flange 121 with a substantially axial arrangement.

The outer wall of the axially movable member 14 may comprise at least one groove provided with sealing means 22 at the interface with the internal wall of the second axially fixed member 13 for keeping the actuation fluid under pressure. The inner wall of the head 11 and/or of the outer wall of the flange 121 may include at least one groove provided with sealing members 23 at the interface of the duct 26 for keeping the actuation fluid under pressure. In the present embodiment, the sealing means 22 are annular seals with an X-shaped cross-section (X-ring) and the sealing members 23 are annular seals with a circular cross-section (O-ring).

The actuation fluid under pressure may be pumped, as indicated by arrow F1, through actuating means 21 connected, for example through the duct 26, to means 20 for detecting the pressure of the fluid. According to the present embodiment, the actuation fluid under pressure is a liquid, preferably oil, the actuating means 21 comprise a pump and/or the means 20 for detecting the pressure of the actuating fluid comprise a pressure gauge.

An actuator member 24, with a substantially cylindrical shape, axially movable with the axially movable member 14 is positioned in a substantially coaxial and/or telescopic manner inside the first axially fixed member 12. The actuator member 24 is connected via an axial duct 29 to a rotating mechanical seal 25 arranged in the axis of the first axially fixed member 12 at the head 11 and/or at the flange 121. Between the outer wall of the actuator member 24 and the inner wall of the first axially fixed member 12 there is a gap G, so that the actuator member 24 can be placed in rotation during the mechanical working. Between the actuator member 24 and the axially movable member 14 there is an axial bearing 28.

The locking device 10 may include a refrigeration system to provide a cooling fluid, as indicated by arrow F2, through the axial duct 29, the mechanical seal 25 and at least one duct 27 provided in the head 11.

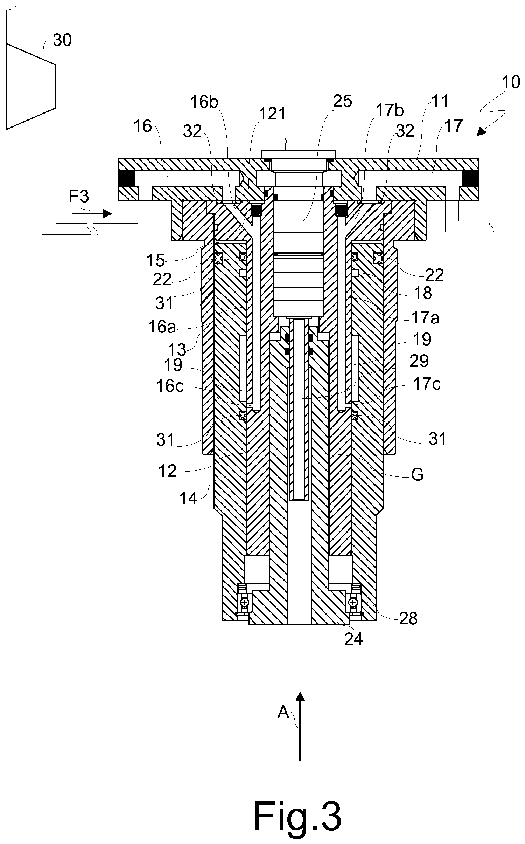

With particular reference to Figure 3, the locking device 10 comprises at least one inlet 16 and/or an outlet 17 for a control fluid under pressure. The ducts 16, 17 extend in a substantially radial manner inside of the head 11 or the flange 121 and in a substantially axial manner in the axially fixed component 12, 13, preferably in the first axially fixed member 12. The axial portions 16a, 17a of the ducts 16, 17 in the first axially fixed member 12 have one end plugged at the inner wall of the head 11. The axial portions 16a, 17a of the ducts 16, 17 are connected with the radial portions in the head 11 through intermediate portions 16b, 17b formed in the flange 121 with a substantially oblique orientation.

The inlet 16 and the outlet 17 for the control fluid may be connected to each other, depending on the position of the axially movable member 14 with respect to the axially fixed component 12, 13, through at least one first chamber 18 and/or a second chamber 19, in particular annular grooves formed on the inner and/or outer walls of the axially movable member 14 at the interface respectively with the outer wall of the first axially fixed member 12 and/or with the inner wall of the second axially fixed member 13. The first chamber 18 is disposed in an innermost position, namely closer to the head 11, compared to the second chamber 19, which is in a distal position of the axially movable member 14. The second chamber 19 has an axial extension greater than the first chamber 18. The inlet 16 and the outlet 17 for the control fluid include terminal portions 16c, 17c which lead towards the interface with the axially movable member 14. The terminal portions 16c, 17c are arranged in a substantially radial manner in the first axially fixed member 12 and/or in the second axially fixed member 13 between the axial portions 16a, 17a of the ducts 16, 17 and, respectively, the outer wall of the first axially fixed member 12 and/or the inner wall of the second axially fixed member 13.

The control fluid under pressure may be supplied, as indicated by arrow F3, via supply means 30 connected with the inlet 16, for example at the head 11. The control fluid under pressure may reach, when the inlet 16 and the outlet 17 are connected to each other, flow detection means connected with the outlet 17, for example at the head 11.

In Figures 2 and 3, the locking device 10 is shown in a retracted configuration, namely in a configuration in which the distance in the direction A between the head 11 and the axially movable member 14 is minimal. In this configuration, the actuating means 21 are not introducing actuation fluid under pressure into the actuation chamber 15, so that the axially movable member 14 is held in position by the resilient locking means.

The inner wall of the head 11 and/or the outer wall of the flange 121 may include at least one groove provided with sealing members 32 at the interface with the inlet 16 and/or with the outlet 17 for keeping the control fluid under pressure. In the present embodiment, the sealing members 32 are annular seals with a circular cross-section (O-ring).

The inner and/or external walls of the axially fixed members 12, 13 and/or of the axially movable member 14 may comprise one or more grooves provided with sealing means 31 at the interface with the wall adjacent for keeping the control fluid under pressure. In the present embodiment, the sealing means 31 are annular seals with a X-shaped cross-section (X-ring). The first chamber 18 and/or the second chamber 19 are arranged between two sealing means 31 arranged in corresponding grooves formed in the inner wall of the axially movable member 14.

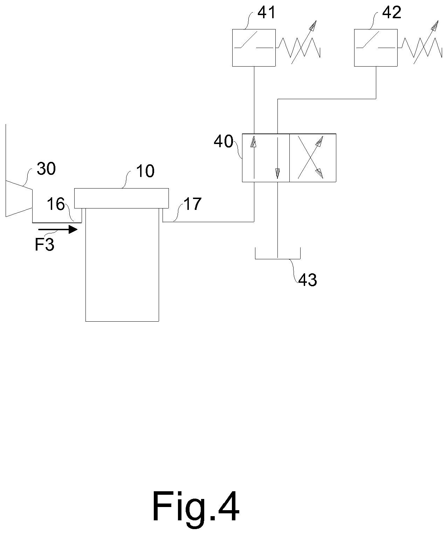

With particular reference also to Figure 4, the flow detection means may comprise a first flow detection device 41, a second flow detection device 42 and/or a vent 43 arranged downstream of an electro-valve 40 with respect to a flow direction of the control under fluid pressure. When the pressure detection means 20 of the actuating fluid under pressure return minimum values, namely when the pump 21 is turned off, the electro-valve 40 is in a first flow position.

In the first flow position the outlet 17 of the locking device 10 is connected through the electro-valve 40 with the first flow detection device 41, while the second flow detection device 42 is put in flow communication with the vent 43, so as to eliminate residues of control fluid under pressure that may be present from the previous measurement, in order not to affect the subsequent measurement.

In the retracted configuration, the inlet 16 and outlet 17 are not connected since, in particular, they are plugged by the inner or outer wall of the axially movable member 14. Consequently, the control fluid under pressure cannot reach the outlet 17 and thus the flow detection means 41, 42 do not detect any flow of the control fluid under pressure.

In the retracted configuration, then, both the pressure detection means 20 of the actuating fluid under pressure and the flow detection means 41, 42 of the control fluid under pressure return values lower than a preset threshold. These values are not necessarily equal to zero since, for example, if the ducts in which the fluids flow have long lengths, there will typically be a minimum residual pressure even when the actuating means 21 and/or the supply means 30 are not working.

The combination of such measures may correspond to an automatic signal, for example to alert an operator that his intervention is required. In this case the operator can program the machine tool to perform the mechanical working or verify any faults.

According to the present embodiment, the control fluid under pressure is a gas, preferably air, and the supply means 30 consist of a compressor. The gas is pumped at a pressure comprised between 4 and 14 bar, preferably between 6 and 8 bar.

In the present embodiment, the first flow detection device 41 and the second flow detection device 42 are pressure switches.

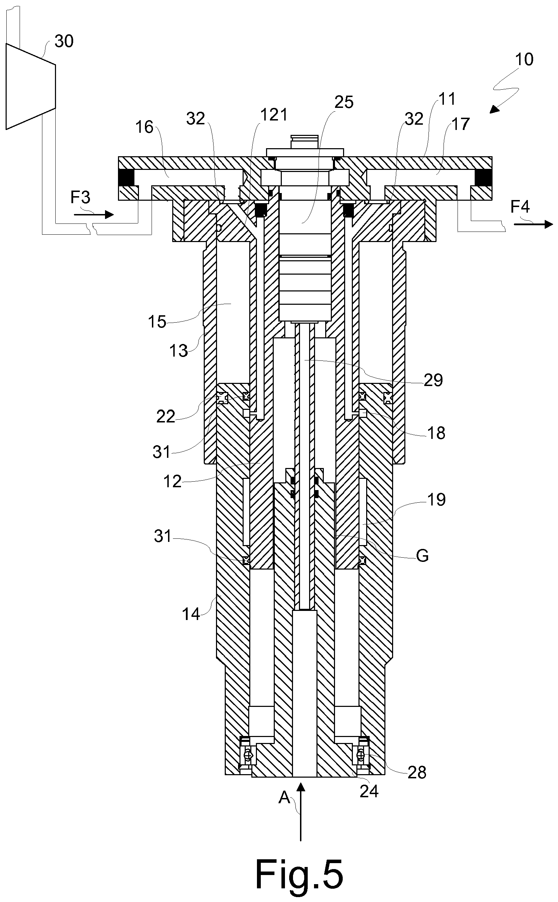

Referring to Figure 5, the locking device 10 is in an extended configuration, namely a configuration in which the distance in the axial direction A between the axially movable member 14 and the head 11 is maximum. The locking device 10 in the extended configuration is adapted to interact with a tool through the actuator member 24, which is suitable to receive internally, or to release from its interior, a tool according to the axial direction A.

The locking device 10 is brought from the retracted configuration to the extended configuration by providing an actuation fluid under pressure into the actuation chamber 15 so as to overcome the force of the spring locking means and to slide the axially movable member 14 between the axially fixed members 12, 13.

In the extended configuration, the inlet 16 and outlet 17 are connected to each other through the first chamber 18 Consequently, the control fluid under pressure can reach, according to a direction indicated by the arrow F4, the flow detection means 41, 42.

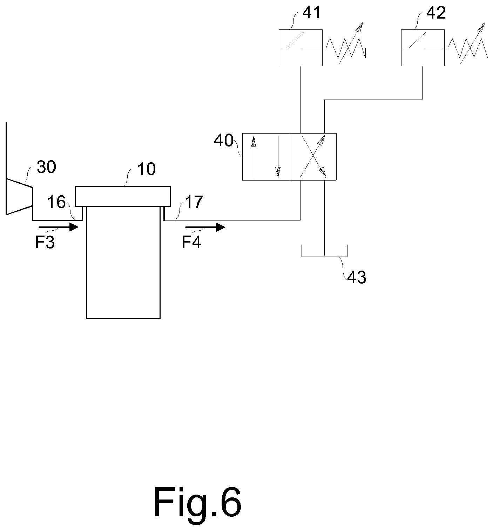

Referring to Figure 6, when the actuating fluid under pressure is pumped into the actuation chamber 15, the pressure detection means 20 of the actuating fluid under pressure return values are above a preset threshold, so that a command is sent to the electro-valve 40 which is brought to a second flow position.

In particular, in the second flow position the outlet 17 is connected with the second flow detection device 42, while the first flow detection device 41 is connected with the vent 43.

In the extended configuration, then, the control fluid under pressure coming from the locking device 10, as indicated by the arrow F4, may reach the second flow detection means 42. Consequently, both the pressure detection means 20 of the actuating fluid under pressure and the flow detection means 42 of control fluid under pressure return values exceeding a preset threshold.

The combination of such measures may correspond for example to an automatic signal that drives a robot to insert a tool into the locking device 10.

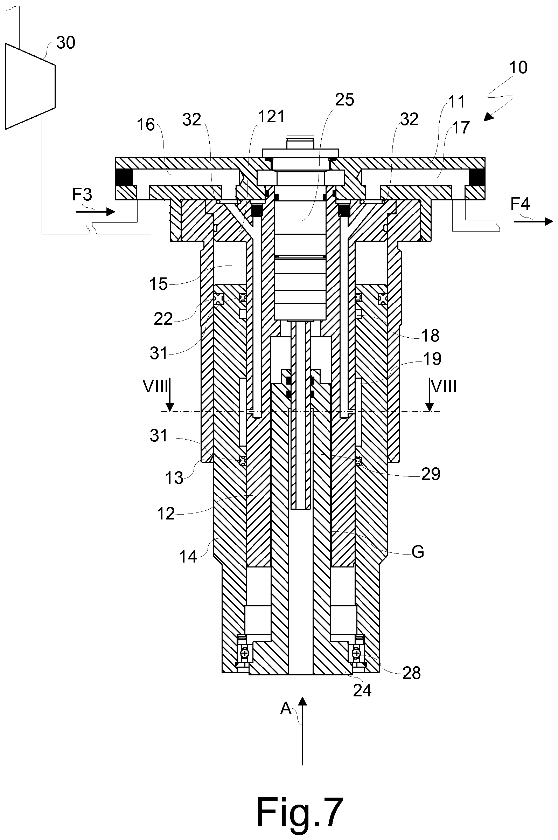

Referring to Figure 7, the locking device 10 is in an operative configuration, or a configuration in which the distance in the axial direction A between the head 11 and the axially movable member 14 has a value between the distance values corresponding to the retracted and extended configurations. The locking device 10 in the operating configuration has an internal tool (not shown in the figures) firmly and properly locked and positioned to start the machining.

The locking device 10 is brought from the extended configuration to the operative configuration by the force of the locking means in the spring after the actuating fluid under pressure is no longer provided inside the actuation chamber 15.

In the operating configuration, the inlet conduit 16 and the outlet conduit 17 are connected between them thanks to the second annular chamber 19 formed inside the member axially movable 14. Consequently, the control fluid under pressure can reach the outlet duct 17 and may be provided, according to the direction indicated by the arrow F4, to the means of detection of flow. In particular, the extension of the second annular chamber 19 in the direction of the axis A, ie, the interval of positions in which this chamber leads the fluid control, identifies the field of work for the locking device 10.

Since the actuating fluid under pressure is no longer provided inside the actuation chamber 15, the pressure detection means of the actuating fluid under pressure return valuesbelow the preset threshold and the electro-valve 40, which is no longer activated, is again in the first flow position.

In the operative configuration, then, the control fluid under pressure coming from the locking device 10, as indicated by the arrow F4, may reach the first flow detection means 41. Consequently, the pressure detection means 20 of the actuating fluid under pressure return values below a preset threshold, while the flow detection means of the control fluid under pressure return values exceeding a preset threshold.

The combination of such measures may correspond for example to an automatic signal which actuates the machine tool to perform the mechanical working.

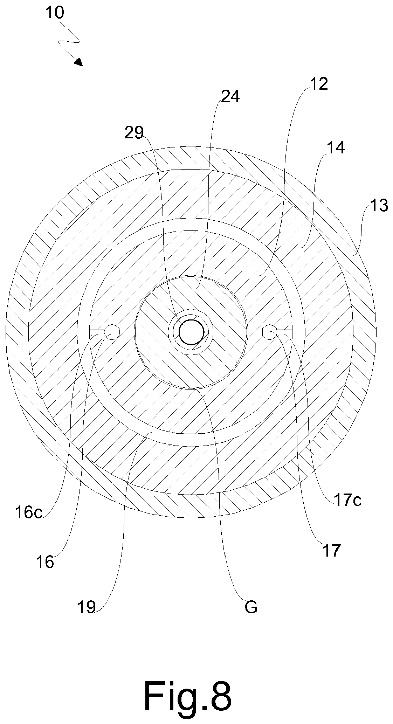

Referring to Figure 8, the inlet 16 is connected with the outlet 17 through the second annular chamber 19 present on the axially movable member 14.

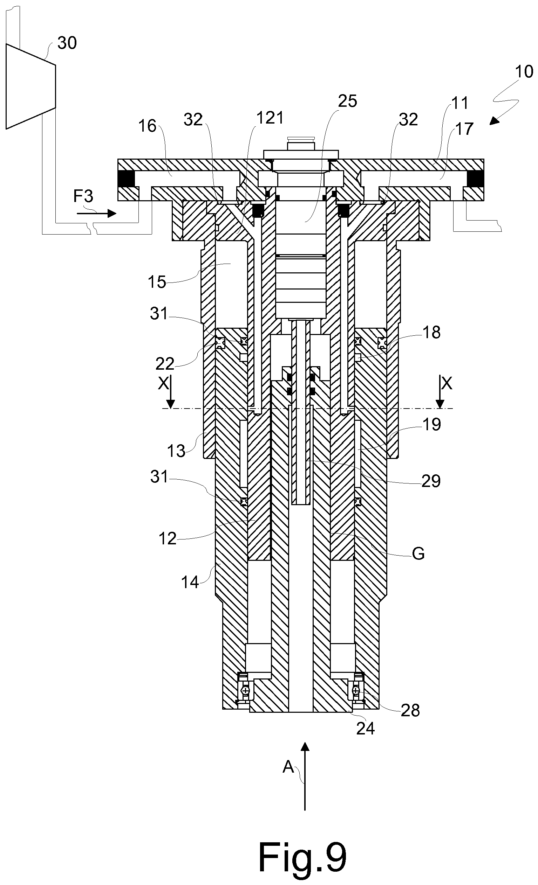

Referring to Figure 9, the locking device 10 is in a non-operating configuration, namely a configuration in which the distance in the axial direction A between the head 11 and the axially movable member 14 has a value comprised between the values of distance corresponding to the operating and extended configurations. The non-operating configuration identifies a position in which the mechanical working cannot be started.

In the non-operating configuration, the inlet 16 and the outlet 17 are not connected since they are, in particular, plugged by the inner wall of the axially movable member 14. Consequently, the control fluid under pressure cannot reach the outlet 17 and thus the flow detection means will not detect any flow of the control fluid under pressure.

In the non-operating configuration, further, the actuating means 21 are not introducing actuating fluid under pressure into the actuation chamber 15 and the axially movable member 14 is held in position by the resilient locking means.

In the non-operating configuration, then, both the pressure detection means of the actuating fluid under pressure and flow detection means of the control fluid under pressure return values below a preset threshold, in a manner similar to the retracted configuration.

The combination of such measures may correspond for example to an automatic signal that alerts the operator that his intervention is required. In this case, for example, the operator can intervene to return the machine tool to a condition for performing the mechanical working.

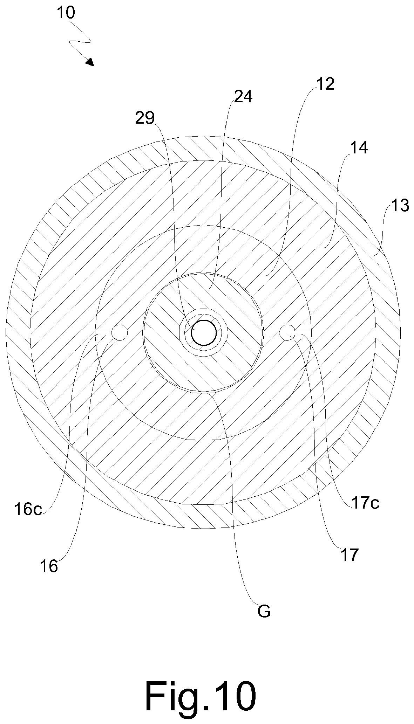

Referring to Figure 10, it is possible to see how the inner wall of the axially movable member 14 does not allow the connection of the inlet 16 with the outlet 17.

In the embodiment shown, a configuration of the flow detection means has been described, which configuration allows to eliminate residues of control fluid under pressure that may be present in the first or second flow detection device 41, 42 through the vent 43. A person skilled in the art will understand that it is also possible to carry out such flow detection means comprising for example a pressure gauge with a vent arranged downstream in the flow direction of the control fluid under pressure.

Furthermore, according to the present embodiment of the invention, a timer imposes a minimum waiting time before which the measures of the pressure detection means 20 of the actuating fluid under pressure and of the flow detection means of the control fluid under pressure are not read.

In this way it is possible to wait that, after the changes of configuration of the locking device 10 and the position changes of the electro-valve 40, the pressure detection means 20 of the actuating fluid under pressure and the flow detection means of the control fluid under pressure have time to go into balance so as to make a reliable measurement. The minimum waiting time can for example be comprised between 2 and 10 seconds, preferably between 4 and 8 seconds.

It will be clear to an expert in the art that a tool holder 10 such as that described is also applicable for static applications as, for example, to hold in position a mechanical piece that can be worked.

Possible variations and/or additions may be made by experts of the art to the embodiment of the invention here described and illustrated remaining within the scope of the following claims. In particular, further embodiments of the invention may comprise the technical features of one of the following claims with the addition of one or more technical features, taken singularly or in any mutual combination, described in the text and/or illustrated in the drawings.

## Claims

1. Locking device (10) for tools, which comprises an axially movable member (14) slidable in an axially fixed component (11, 12, 13) comprising at least one first axially fixed member (12) and a second axially fixed member (13) fastened to at least one head (11), the movement of the axially movable member (14) in the axially fixed component (11, 12, 13) determining the locking or the unlocking of a tool in the device (10), **characterized in that** at least one inlet (16) and one outlet (17) for a control fluid under pressure are made in said axially fixed component (11, 12, 13) and can be connected to each other in at least one position of the axially movable member (14) in the axially fixed component (11, 12, 13), through at least one first chamber (18) and/or a second chamber (19) made on said axially movable member (14), while in the other positions of the axially movable member (14) in the axially fixed component (11, 12, 13) the inlet (16) and the outlet (17) are not connected to each other, wherein means for flow detection (40, 41, 42, 43) of the control fluid under pressure are connected to said outlet (17).

2. Locking device (10) according to the preceding claim, **characterized in that** said inlet (16) and said outlet (17) are made inside of the head (11) and/or of the first axially fixed member (12) and/or of the second axially fixed member (13).

3. Locking device (10) according to the preceding claim, **characterized in that** said inlet (16) and said outlet (17) are made in the first axially fixed member (12) and can be connected to each other through the first chamber (18) or the second chamber (19) at the interface with an outer wall of the first axially fixed member (12).

4. Locking device (10) according to one of the preceding claims, **characterized in that,** when said axially movable member (14) is in a retracted configuration, said inlet (16) and said outlet (17) are plugged by at least one wall of the axially movable member (14).

5. Locking device (10) according to one of the preceding claims, **characterized in that,** when said axially movable member (14) is in an extended configuration, said inlet (16) and said outlet (17) are connected to each other through the first chamber (18).

6. Locking device (10) according to one of the preceding claims, **characterized in that** when said axially movable member (14) is in an operating configuration between a retracted configuration and an extended configuration, said inlet (16) and said outlet (17) are connected to each other through the second chamber (19), wherein a tool is locked in the device (10) in said operating configuration.

7. Locking device (10) according to the preceding claim, **characterized in that,** when said axially movable member (14) is in a non-operating configuration comprised between the operating configuration and an extended configuration, said inlet (16) and said outlet (17) are plugged by at least one wall of the axially movable member (14).

8. Locking device (10) according to one of the preceding claims, **characterized in that** the first axially fixed member (12) comprises a flange (121) which is joined to the head (11) and/or to the second axially fixed member (13), acting as an abutment for the axially movable member (14).

9. Locking device (10) according to one of the preceding claims, **characterized in that** the second chamber (19) has an axial extension greater than the first chamber (18).

10. Locking device (10) according to one of the preceding claims, **characterized in that** the first chamber (18) and/or the second chamber (19) are annular grooves made on the inner and/or outer walls of the axially movable member (14).

11. Locking device (10) according to the preceding claim, **characterized in that** said annular grooves are made at the interface with the outer wall of the first axially fixed member (12) and/or with the inner wall of the second axially fixed member (13), respectively.

12. Locking device (10) according to one of the preceding claims, **characterized in that** said flow detection means (40, 41, 42, 43) of the control fluid under pressure comprise at least one flow detection device (41, 42) and a vent (43).

13. Locking device (10) according to the preceding claim, **characterized in that** said flow detection means (40, 41, 42, 43) of the control fluid under pressure comprise an electro-valve (40), a first flow detection device (41) and a second flow detection device (42) arranged downstream of said electro-valve (40) according to a flow direction of the control fluid under pressure.

14. Locking device (10) according to one of the preceding claims, **characterized in that** said control fluid under pressure is a gas, in particular air, pumped into the inlet (16) at a pressure comprised between 4 and 14 bar, in particular between 6 and 8 bar.

15. Locking device (10) according to one of the preceding claims, **characterized in that** the axially movable member (14) can slide being driven by pressure actuation means (21) of a fluid, in particular oil, which are connected to pressure detection means (20) of the fluid.

16. Locking device (10) according to the preceding claim, **characterized by** comprising a timer which imposes a minimum waiting time comprised between 2 and 10 seconds, in particular between 4 and 8 seconds, before which no measurements of the pressure detection means (20) of the actuating fluid under pressure and of the flow detection means (41, 42) of the control fluid under pressure are carried out, said minimum waiting time starting from changes of configuration of the locking device (10) or position changes of the electro-valve (40).

## Patentansprüche

1. Verriegelungsvorrichtung (10) für Werkzeuge, welche ein axial bewegliches Teil (14) umfasst, das in einer axial fixierten Komponente (11, 12, 13) verschiebbar ist, die wenigstens ein erstes, axial fixiertes Teil (12) umfasst sowie ein zweites, axial fixiertes Teil (13), das an wenigstens einem Kopfstück (11) befestigt ist, wobei die Bewegung des axial beweglichen Teils (14) in der axial fixierten Komponente (11, 12, 13) die Verriegelung oder Entriegelung eines Werkzeugs in der Vorrichtung (10) bestimmt, **dadurch gekennzeichnet, dass** wenigstens ein Einlass (16) und ein Auslass (17) für ein unter Druck stehendes Steuerfluid in der besagten, axial fixierten Komponente (11, 12, 13) vorgesehen sind und miteinander verbunden werden können in wenigstens einer Position des axial beweglichen Teils (14) in der axial fixierten Komponente (11, 12, 13), über wenigstens eine erste Kammer (18) und/oder eine zweite Kammer (19) an dem besagten, axial beweglichen Teil (14), während in den anderen Positionen des axial beweglichen Teils (14) in der axial fixierten Komponente (11, 12, 13) der Einlass (16) und der Auslass (17) nicht miteinander verbunden sind, wobei ein Mittel zur Flusserkennung (40, 41, 42, 43) des unter Dr4uck stehenden Steuerfluids an dem besagten Auslass (17) angeschlossen ist.

2. Verriegelungsvorrichtung (10) gemäß dem vorangehenden Anspruch, **dadurch gekennzeichnet, dass** der besagte Einlass (16) und der besagte Auslass (17) innerhalb des Kopfstücks (11) vorgesehen sind und/oder innerhalb des ersten, axial fixierten Teils (12) und/oder innerhalb des zweiten, axial fixierten Teils (13).

3. Verriegelungsvorrichtung (10) gemäß dem vorangehenden Anspruch, **dadurch gekennzeichnet, dass** der besagte Einlass (16) und der besagte Auslass (17) innerhalb des ersten, axial fixierten Teils (12) vorgesehen sind und miteinander verbunden werden können über die erste Kammer (18) oder die zweite Kammer (19) an der Schnittstelle mit einer äußeren Wand des ersten, axial fixierten Teils (12).

4. Verriegelungsvorrichtung (10) gemäß einem der vorangehenden Ansprüche, **dadurch gekennzeichnet, dass** dann, wenn sich das besagte, axial bewegliche Teil (14) in einer zurückgezogenen Konfiguration befindet, der besagte Einlass (16) und der besagte Auslass (17) vermittels wenigstens einer Wand des axial beweglichen Teils (14) verstopft sind.

5. Verriegelungsvorrichtung (10) gemäß einem der vorangehenden Ansprüche, **dadurch gekennzeichnet, dass** dann, wenn sich das besagte, axial bewegliche Teil (14) in einer ausgestreckten Konfiguration befindet, der besagte Einlass (16) und der besagte Auslass (17) über die erste Kammer (18) miteinander verbunden sind.

6. Verriegelungsvorrichtung (10) gemäß einem der vorangehenden Ansprüche, **dadurch gekennzeichnet, dass** dann, wenn sich das besagte, axial bewegliche Teil (14) in einer wirksamen Konfiguration zwischen einer zurückgezogenen und einer ausgestreckten Konfiguration befindet, der besagte Einlass (16) und der besagte Auslass (17) über die zweite Kammer (19) miteinander verbunden sind, wobei ein Werkzeug in der Vorrichtung (10) in der besagten Betriebskonfiguration verriegelt ist.

7. Verriegelungsvorrichtung (10) gemäß dem vorangehenden Anspruch, **dadurch gekennzeichnet, dass** dann, wenn sich das besagte, axial bewegliche Teil (14) in einer unwirksamen Konfiguration zwischen der wirksamen Konfiguration und einer ausgestreckten Konfiguration befindet, der besagte Einlass (16) und der besagte Auslass (17) vermittels wenigstens einer Wand des axial beweglichen Teils (14) verstopft sind.

8. Verriegelungsvorrichtung (10) gemäß einem der vorangehenden Ansprüche, **dadurch gekennzeichnet, dass** das erste, axial fixierte Teil (12) einen Flansch (121) umfasst, der mit dem Kopfstück (11) verbunden ist und/oder mit dem zweiten, axial fixierten Teil (13), und als ein Widerlager für das axial bewegliche Teil (14) wirkt.

9. Verriegelungsvorrichtung (10) gemäß einem der vorangehenden Ansprüche, **dadurch gekennzeichnet, dass** die zweite Kammer (19) eine axiale Erstreckung aufweist, die größer ist als die erste Kammer (18).

10. Verriegelungsvorrichtung (10) gemäß einem der vorangehenden Ansprüche, **dadurch gekennzeichnet, dass** die erste Kammer (18) und/oder die zweite Kammer (19) aus ringförmigen Nuten an den inneren und/oder äußeren Wänden des axial beweglichen Teils (14) bestehen.

11. Verriegelungsvorrichtung (10) gemäß dem vorangehenden Anspruch, **dadurch gekennzeichnet, dass** die besagten ringförmigen Nuten sich an der Schnittstelle zu der äußeren Wand des ersten, axial beweglichen Teils (12) befinden und/oder zu der inneren Wand des zweiten, axial beweglichen Teils (13).

12. Verriegelungsvorrichtung (10) gemäß einem der vorangehenden Ansprüche, **dadurch gekennzeichnet, dass** das besagte Flusserkennungsmittel (40, 41, 42, 43) für das unter Druck stehende Steuerfluid wenigstens eine Flusserkennungseinrichtung (41, 42) und eine Entlüftung (43) umfasst.

13. Verriegelungsvorrichtung (10) gemäß dem vorangehenden Anspruch, **dadurch gekennzeichnet, dass** das besagte Flusserkennungsmittel (40, 41, 42, 43) für das unter Druck stehende Steuerfluid ein ElektroVentil (40), eine erste Flusserkennungseinrichtung (41) und eine zweite Flusserkennungseinrichtung (42) umfasst, welche in Bezug auf eine Flussrichtung des unter Druck stehenden Steuerfluids stromabwärts des besagten Elektro-Ventils (40) angeordnet sind.

14. Verriegelungsvorrichtung (10) gemäß einem der vorangehenden Ansprüche, **dadurch gekennzeichnet, dass** das besagte, unter Druck stehende Steuerfluid ein Gas ist, insbesondere Luft, die in den Einlass (16) bei einem Druck zwischen 4 und 14 Bar gepumpt wird, insbesondere zwischen 6 und 8 Bar.

15. Verriegelungsvorrichtung (10) gemäß einem der vorangehenden Ansprüche, **dadurch gekennzeichnet, dass** das axial bewegliche Teil (14) gleiten kann, angetrieben durch ein auf eine Flüssigkeit, insbesondere Öl, Druck ausübendes Mittel (21), welches mit einem Mittel (20) zur Erkennung des Fluiddrucks verbunden ist.

16. Verriegelungsvorrichtung (10) gemäß dem vorangehenden Anspruch, **dadurch gekennzeichnet, dass** sie einen Zeitgeber umfasst, der eine minimale Wartezeit zwischen 2 und 10 Sekunden auferlegt, insbesondere zwischen 4 und 8 Sekunden, vor deren Ablauf keine Messungen des Druckerkennungsmittels (20) an dem unter Druck stehenden Betätigungsfluid durchgeführt werden sowie keine Messungen des Flusserkennungsmittels (41, 42) an dem unter Druck stehenden Steuerfluid, wobei die besagte minimale Wartezeit bei Änderungen der Konfiguration der Verriegelungsvorrichtung (10) oder bei Positionsänderungen des Elektro-Ventils (40) startet.

## Revendications

1. Dispositif de verrouillage (10) pour outils, qui comprend un élément axialement mobile (14) de manière coulissante dans un composant axialement fixe (11, 12, 13) comprenant au moins un premier élément axialement fixe (12) et un second élément axialement fixe (13) fixé sur au moins une tête (11), le déplacement de l'élément axialement mobile (14) dans le composant axialement fixe (11, 12, 13) déterminant le verrouillage ou le déverrouillage d'un outil dans le dispositif (10), **caractérisé en ce qu'**au moins une entrée (16) et une sortie (17) pour un fluide de commande sous pression sont réalisées dans ledit composant axialement fixe (11, 12, 13) et peuvent être raccordées entre elles dans au moins une position de l'élément axialement mobile (14) dans le composant axialement fixe (11, 12, 13), par le biais d'au moins une première chambre (18) et/ou une seconde chambre (19) réalisées sur ledit élément axialement mobile (14), alors que dans les autres positions de l'élément axialement mobile (14) dans le composant axialement fixe (11, 12, 13), l'entrée (16) et la sortie (17) ne sont pas raccordées entre elles, dans lequel des moyens pour la détection d'écoulement (40, 41, 42, 43) du fluide de commande sous pression sont raccordés à ladite sortie (17).

2. Dispositif de verrouillage (10) selon la revendication précédente, **caractérisé en ce que** ladite entrée (16) et ladite sortie (17) sont réalisées à l'intérieur de la tête (11) et/ou du premier élément axialement fixe (12) et/ou du second élément axialement fixe (13).

3. Dispositif de verrouillage (10) selon la revendication précédente, **caractérisé en ce que** ladite entrée (16) et ladite sortie (17) sont réalisées dans le premier élément axialement fixe (12) et peuvent être raccordées entre elles à travers la première chambre (18) ou la seconde chambre (19) au niveau de l'interface avec une paroi externe du premier élément axialement fixe (12).

4. Dispositif de verrouillage (10) selon l'une des revendications précédentes, **caractérisé en ce que**, lorsque ledit élément axialement mobile (14) est dans une configuration rétractée, ladite entrée (16) et ladite sortie (17) sont branchées par au moins une paroi de l'élément axialement mobile (14).

5. Dispositif de verrouillage (10) selon l'une des revendications précédentes, **caractérisé en ce que**, lorsque ledit élément axialement mobile (14) est dans une configuration étendue, ladite entrée (16) et ladite sortie (17) sont raccordées entre elles par le biais de la première chambre (18).

6. Dispositif de verrouillage (10) selon l'une des revendications précédentes, **caractérisé en ce que** lorsque ledit élément axialement mobile (14) est dans une configuration opérationnelle entre une configuration rétractée et une configuration étendue, ladite entrée (16) et ladite sortie (17) sont raccordées entre elles à travers la seconde chambre (19), dans lequel un outil est verrouillé dans le dispositif (10) dans ladite configuration opérationnelle.

7. Dispositif de verrouillage (10) selon la revendication précédente, **caractérisé en ce que**, lorsque ledit élément axialement mobile (14) est dans une configuration non opérationnelle comprise entre la configuration opérationnelle et la configuration étendue, ladite entrée (16) et ladite sortie (17) sont branchées par au moins une paroi de l'élément axialement mobile (14).

8. Dispositif de verrouillage (10) selon l'une des revendications précédentes, **caractérisé en ce que** le premier élément axialement fixe (12) comprend une bride (121) qui est assemblée à la tête (11) et/ou au second élément axialement fixe (13), servant de butée pour l'élément axialement mobile (14).

9. Dispositif de verrouillage (10) selon l'une des revendications précédentes, **caractérisé en ce que** la seconde chambre (19) a une extension axiale supérieure à la première chambre (18).

10. Dispositif de verrouillage (10) selon l'une des revendications précédentes, **caractérisé en ce que** la première chambre (18) et/ou la seconde chambre (19) sont des rainures annulaires réalisées sur les parois internes et/ou externes de l'élément axialement mobile (14).

11. Dispositif de verrouillage (10) selon la revendication précédente, **caractérisé en ce que** lesdites rainures annulaires sont réalisées au niveau de l'interface avec la paroi externe du premier élément axialement fixe (12) et/ou avec la paroi interne du second élément axialement fixe (13) respectivement.

12. Dispositif de verrouillage (10) selon l'une des revendications précédentes, **caractérisé en ce que** lesdits moyens de détection d'écoulement (40, 41, 42, 43) du fluide de commande sous pression comprennent au moins un dispositif de détection d'écoulement (41, 42) et un évent (43).

13. Dispositif de verrouillage (10) selon la revendication précédente, **caractérisé en ce que** lesdits moyens de détection d'écoulement (40, 41, 42, 43) du fluide de commande sous pression comprennent une électrovanne (40), un premier dispositif de détection d'écoulement (41) et un second dispositif de détection d'écoulement (42) agencés en aval de ladite électrovanne (40) selon une direction d'écoulement du fluide de commande sous pression.

14. Dispositif de verrouillage (10) selon l'une des revendications précédentes, **caractérisé en ce que** ledit fluide de commande sous pression est un gaz, en particulier de l'air, pompé dans l'entrée (16) à une pression comprise entre 4 et 14 bar, en particulier entre 6 et 8 bar.

15. Dispositif de verrouillage (10) selon l'une des revendications précédentes, **caractérisé en ce que** l'élément axialement mobile (14) peut coulisser en étant entraîné par des moyens d'actionnement de pression (21) d'un fluide, en particulier de l'huile, qui sont raccordés aux moyens de détection de pression (20) du fluide.

16. Dispositif de verrouillage (10) selon la revendication précédente, **caractérisé en ce qu'**il comprend un minuteur qui impose un temps d'attente minimum compris entre 2 et 10 secondes, en particulier entre 4 et 8 secondes, avant quoi aucune mesure des moyens de détection de pression (20) du fluide d'actionnement sous pression et des moyens de détection d'écoulement (41, 42) du fluide de commande sous pression n'est réalisé, ledit temps d'attente minimum commençant à partir des changements de configuration du dispositif de verrouillage (10) ou des changements de position de l'électrovanne (40).
